Europäisches Patentamt

European Patent Office

Office européen des brevets

(11) Veröffentlichungsnummer: **0 394 953**
**A2**

(12) **EUROPÄISCHE PATENTANMELDUNG**

(21) Anmeldenummer: **90107740.4**

(22) Anmeldetag: **24.04.90**

(51) Int. Cl.⁵: **C05D 11/00**

(30) Priorität: **26.04.89 DE 3913727**

(43) Veröffentlichungstag der Anmeldung:
**31.10.90 Patentblatt 90/44**

(84) Benannte Vertragsstaaten:
**AT BE CH DE FR LI NL**

(71) Anmelder: **GREVENBRÜCKER KALKWERKE GMBH**
**Siegener Strasse 1, Postfach 30 10**
**D-5940 Lennestadt 11(DE)**

(72) Erfinder: **Der Erfinder hat auf seine Nennung verzichtet**

(54) **Kalkdüngemittel.**

(57) Um der Bodenversauerung, insbesondere von Waldböden entgegenzuwirken und Magnesium-Mangel zu beheben, werden üblicherweise Kalkdüngemittel mit einem Anteil an Magnesium zugesetzt. Das neue Kalkdüngemittel soll außerdem die Nährstoffaufnahme so begünstigen, daß das Wachstum der Bäume normalisiert wird.

Dies wird dadurch erreicht, daß das Düngemittel auf Basis von Kalziumkarbonat, Magnesiumkarbonat oder Mischungen daraus Molybdän in pflanzenaufnehmbarer Form enthält, vorzugsweise in Massenanteilen von 0,001 bis 0,05 %.

Das Kalkdüngemittel eignet sich zur Kalkung und Düngung von Waldböden.

EP 0 394 953 A2

## Kalkdüngemittel

Die Erfindung betrifft ein Düngemittel auf Basis von Kalziumkarbonat, Magnesiumkarbonat oder Mischungen daraus sowie ein Verfahren zur Herstellung des Kalkdüngemittels.

Zur Bekämpfung und Verhinderung von Waldschäden ist bekannt, Düngemittel auf Basis von kohlensaurem Magnesiumkalk auf den Waldboden aufzubringen. Durch Luftverunreinigungen belastetes Regenwasser bewirkt eine Versauerung des Bodens unter einem pH-Wert von 5. Dies hat zur Folge, daß die Böden an basischen Nährstoffen wie Kalzium und Magnesium verarmen. Insbesondere der Magnesiummangel führt zum Beispiel bei Fichten und Koniferen zur Vergilbung in den Nadeln.

Durch die handelsüblichen Kalkdüngemittel kann zwar der Bodenversauerung entgegengewirkt werden und, soweit Magnesium enthalten ist, können auch die entsprechenden Mangelerscheinungen behoben werden. Es wurde aber gefunden, daß auch Mangel an anderen Nährstoffen zum Teil in Spuren, entscheidend das Erscheinungsbild der Waldschäden bestimmt.

Der Erfindung liegt die Aufgabe zugrunde, ein Düngemittel bereitzustellen, das die durch Bodenversauerung von Waldböden und durch mangelnde Nährstoffaufnahme hervorgerufenen Schäden beseitigt und das Wachstum bei Bäumen normalisiert.

Die Aufgabe wird dadurch gelöst, daß das Düngemittel auf Basis von Kalziumkarbonat, Magnesiumkarbonat oder Mischungen daraus Molybdän in pflanzenaufnehmbarer Form enthält. Das Molybdän kann als Molybdat enthalten sein.

Der Massenanteil an Molybdän kann vorzugsweise 0,001 bis 0,05 % betragen. Höhere Gehalte als 0,05 % sind zwar unschädlich, bringen aber keine Verbesserung in der Wirkung sondern lediglich höhere Kosten.

Besonders vorteilhaft ist es, wenn das Düngemittel zusätzlich Stickstoff und/oder Phosphat vorzugsweise in Massenanteilen von 1 bis 5 % enthält. Die Zugabe von Nitrat fördert den Molybdän-Transfer und verbessert die Wirksamkeit des Düngers.

Ein Verfahren zur Herstellung des Düngemittels kann dadurch gekennzeichnet sein, daß man ein Düngemittel auf Basis von Kalziumkarbonat, Magnesiumkarbonat oder Mischungen daraus, mit einer molybdänhaltigen wäßrigen Lösung besprüht und vermischt. Eine vorteilhafte Ausgestaltung der Erfindung besteht darin, daß man die Ausgangsstoffe zunächst auf eine Körnung < 0,1 mm aufmahlt und unter Zusatz von molybdänhaltigen Salzen, anderen Nährstoffsalzen und Wasser granuliert. Dadurch wird die Handhabbarkeit verbessert und es werden insbesondere Beeinträchtigungen der Kleinlebewelt vermieden. Innerhalb der Vegetationszeit darf ohnehin nur granuliertes Kalkmaterial gestreut werden.

Besonders vorteilhaft ist es, wenn man aus Entstickungsanlagen gewonnenes und Nährstoffsalze enthaltendes Wasser zusetzt. Die Granulierung wird üblicherweise mit Wassermengen von 5 bis 20 % durchgeführt. Gleichzeitig wird durch Zusatz von weiteren Nährstoffsalzen die Wirksamkeit des Molybdäns verbessert.

Das erfindungsgemäße Kalkdüngemittel ist hervorragend geeignet zur Kalkung und Düngung von Waldböden. Das Ausbringen erfolgt vorrangig mit Hilfe von Hubschraubern. Die ausgebrachte Menge beträgt üblicherweise etwa 3 Tonnen Düngemittel pro Hektar Waldboden. Da das erfindungsgemäße Düngemittel wenig aggressiv ist, kann die Dosierung auch gefahrlos erhöht werden.

Zur näheren Erläuterung der Erfindung werden nachfolgend Beispiele angegeben.

Beispiel 1

Ein klassierter und getrockneter kohlensaurer Magnesiumkalk mit einem Korngrößenbereich von 0,1 bis 2 mm hat folgende Zusammensetzung:
$CaCO_3$ 55 %
$MgCO_3$ 40 %
Verunreinigungen 5 %
Außerdem sind Spuren von Kupfer und Zink enthalten.

300 g Natriummolybdat ($Na_2MoO_4$ . 2 $H_2O$) wurden in 10 l Wasser gelöst. Mit dieser molybdänhaltigen wäßrigen Lösung wurden 3 Tonnen der Ausgangsmischung besprüht. Das Düngemittel wurde 3 Minuten lang vermischt. Danach war das Molybdat ausreichend homogen verteilt.

Das erfindungsgemäße Düngemittel hatte folgende Zusammensetzung:
$CaCO_3$ 55 %
$MgCO_3$ 40 %
Mo 0,004 %
Rest 5 %

Beispiel 2

Die Ausgangsmischung gemäß Beispiel 1 wurde mit einer Lösung von 300 g Natriummolybdat ($Na_2MoO_4$ . 2 $H_2O$) und 30 kg Chilesalpeter ($NaNO_3$) in 10 l Wasser behandelt. Das erhaltene Düngemittel hatte im wesentlichen dieselbe Zusammensetzung wie beim Beispiel 1. Der Anteil an Stickstoff beträgt 0,16 %. Zusätzlich sind Spuren von Bor enthalten.

**Ansprüche**

1. Düngemittel auf Basis von Kalziumkarbonat, Magnesiumkarbonat oder Mischungen daraus, **dadurch gekennzeichnet**, daß es Molybdän in pflanzenaufnehmbarer Form enthält.

2. Düngemittel nach Anspruch 1, dadurch gekennzeichnet, daß das Molybdän als Molybdat vorliegt.

3. Düngemittel nach Anspruch 1 oder 2, dadurch gekennzeichnet, daß der Massenanteil an Molybdän 0,001 bis 0,05 % beträgt.

4. Düngemittel nach einem der Ansprüche 1 bis 3, dadurch gekennzeichnet, daß es zusätzlich Stickstoff und/oder Phosphat enthält.

5. Düngemittel nach Anspruch 4, dadurch gekennzeichnet, daß der Massenanteil an Stickstoff und/oder Phosphat 1 bis 5 % beträgt.

6. Verfahren zur Herstellung des Düngemittels nach Anspruch 1, dadurch gekennzeichnet, daß man ein Düngemittel auf Basis von Kalziumkarbonat, Magnesiumkarbonat oder Mischungen daraus mit einer molybdänhaltigen wäßrigen Lösung besprüht und vermischt.

7. Verfahren nach Anspruch 6, dadurch gekennzeichnet, daß man das Düngemittel auf Basis von Kalziumkarbonat, Magnesiumkarbonat oder Mischungen daraus auf eine Körnung < 0,1 mm aufmahlt und unter Zusatz von molybdänhaltigen Salzen, anderen Nährstoffsalzen und Wasser granuliert.

8. Verfahren nach Anspruch 7, dadurch gekennzeichnet, daß man aus Entstickungsanlagen gewonnenes und Nährstoffsalze enthaltendes Wasser zusetzt.

9. Verwendung des Düngemittels nach einem der Ansprüche 1 bis 8 zur Kalkung und Düngung von Waldböden.